# EUROPEAN PATENT SPECIFICATION

(11) **EP 0 800 001 B1**
(45) Date of publication and mention of the grant of the patent: **12.12.2001**
(21) Application number: 97302054.8
(22) Date of filing: 26.03.1997
(51) Int. Cl.: F15B 13/00

(54) **Pilot solenoid valve**
Elektromagnetisch betätiges Steuerventil
Electrovanne pilote

(30) Priority: 03.04.1996 JP 10630996
(43) Date of publication of application: 08.10.1997
(73) Proprietor: SMC CORPORATION, Minato-ku Tokyo 105 (JP)
(72) Inventor: Sato, Hideharu, c/o SMC Corporation, Yawara-mura, Tsukuba-gun, Ibaraki (JP); Miyazoe, Shinji, c/o SMC Corporation, Yawara-mura, Tsukuba-gun, Ibaraki (JP); Matsumoto, Takumi, c/o SMC Corporation, Yawara-mura, Tsukuba-gun, Ibaraki (JP)
(74) Representative: Findlay, Alice Rosemary

(56) References cited:
- EP-A- 0 626 521
- DE-A- 4 305 608
- FR-A- 2 686 126
- US-A- 5 184 648

## Description

The present invention relates to a pilot solenoid valve that is installed on a manifold base to drive the valve body of a main valve. The valve uses a pilot fluid supplied or ejected through pilot valves driven by a solenoid; the pilot fluid switches the output opening of the main valve between a supply opening and an ejection opening.

Pilot solenoid valves of this type are well known and do not require detailed illustration. Such valves generally have pilot valves directly attached to the main valve, all of which are integrated and mounted on the manifold base.

In recent years, specifications of the parts of the valve mounted on the manifold base have changed frequently due to the many types used and due to small quantity production. For example, a single solenoid valve is changed to a double solenoid, or an operation section is changed so that the valves can be manually operated during service interruption, or the voltage supplied to the pilot valve solenoids is changed, or an indicator is added showing the operation of the pilot valves.

As the main valve and the pilot valves are integrated, both must be replaced each time specifications change. This is an economical problem because many common parts are used in pilot solenoid valves. Furthermore, the integration of the main and pilot valves prevents easy replacement of parts.

In one of our earlier Applications, EP-A-0626521, we disclose a manifold valve having a main valve and solenoid driven pilot valve mounted together on a manifold base.

A goal of this invention is to provide a pilot solenoid valve that eliminates the need to replace both the main and pilot valves, that allows components having different specifications to be accommodated, and that allows defective parts to be repaired or replaced easily and economically.

According to the present invention, a pilot solenoid valve comprises on a manifold base, a main valve for switching an output opening between a supply opening and an ejection opening for communication, and at least one pilot valve driven by a solenoid to drive the valve body of the main valve, the pilot solenoid valve axially driving the valve body of the main valve using pilot fluid supplied or ejected through the or each pilot valve to switch between the openings for communication pressure fluid supply and ejection channels running through the manifold base in the direction in which a number of manifold bases may be joined, and an output port in the manifold base that opens to a front end surface, passages in the manifold base opening the channels and port into corresponding openings in the main valve installation surface, wherein the pilot solenoid valve further comprises a main valve installation surface on the manifold base, on which a main valve may be installed and a separate pilot valve installation surface on the manifold base on which two pilot valves may be installed separately from the main valve first and second pilot supply and ejection passages in the manifold base that open into positions corresponding to the pilot supply and ejection openings in the pilot valve installation surface, and at least one pilot output passage in the manifold base with one end opening into the pilot output opening in the pilot valve installation surface and the other end opening into the pilot fluid passage in the main valve installation surface for the main valve.

The main valve is installed on the main valve installation surface and the pilot valves are required to operate the main valve are installed on the pilot valve 'installation surface, such that the valves are separately installed and stand discretely.

Alternately, the manifold base may include an external pilot passage that allows pilot supply channels to open into the pilot fluid passages in the main valve installation surface, instead of, or in addition to, a first or second pilot output passage.

In the preferred embodiment of this invention, feed sockets are provided for the two pilot valves, and the pilot valves each have a feed terminal. The sockets connect to a feed line, housed in a passage formed in the manifold base.

When the main valve is installed on the main valve installation surface for the manifold base and one or two solenoid-driven pilot valves are installed on the pilot valve installation surface, then the supply, ejection, and output openings of the main valve communicate with the pressure fluid supply and ejection channels and output port in the manifold base, and the pilot supply and ejection openings of the pilot valves communicate with the pilot supply and ejection channels. When the pilot valves operate to supply and eject pressure fluid to and from the pilot valves through the pilot supply and ejection passages in the manifold base, pilot fluid is output to the pilot valves from the pilot output channel in the manifold base to drive the main valve. If an external pilot passage is formed in the manifold base, the main valve can output an external pilot fluid.

In this pilot solenoid valve, since the main valve and the pilot valves are installed separately on the manifold base, a main valve of single or double solenoid type can be installed on the valve installation surface for the manifold base. One or two pilot valves can be installed on the pilot valve installation surface, depending on the main valve type, allowing use of either a single or double solenoid pilot solenoid valve.

In addition, to change the specification of the pilot solenoid valve or for repair, the individual parts themselves are easily replaced, without replacing both main and pilot valves. In contrast to solenoid valves with pilot valves attached to a main valve, this pilot solenoid valve allows valves to be individually separated from the manifold base, allowing changes in the specification of the manual operation section that allows the valves to be manually operated during service interruption, a change in the voltage supplied to the solenoids of the pilot valves or in indicators.

Since main and pilot valves are installed separate from each other, maintenance and inspection can be done without contacting the pilot valves with electric wiring. This design not only improves safety, it reduces costs by enabling valves to be individually replaced when the specification must be changed, or if they are damaged.

If the pilot valve installation surface does not include both pilot valves - if, for example, the pilot solenoid valve is of a single solenoid type - the unused channel can be temporarily closed, using a removable plug.

In addition, by providing a feeding line storage passage along the direction of the manifolds join through which a feeding line for feeding the solenoids of the pilot valves passes, and by installing on the pilot valve installation surface feeding sockets connected to the feeding line in the feeding line storage passage, a feeding terminal can be connected to the socket simultaneously with the mounting of the pilot valves on the installation surface, enabling electricity to be easily connected and disconnected from the pilot valves.

The invention will now be further described by way of example with reference to the accompanying drawings in which:
Figure 1 is a vertical cross sectional side view that illustrates the configuration of a first embodiment taken along the line A-A in Figure 3.
Figure 2 is a vertical cross sectional side view showing a variation of the first embodiment taken along line B-B.
Figure 3 is a plan view showing an implementation in which pilot solenoid valves are joined.
Figure 4 is a front view of Figure 3.
Figure 5 is a side view of Figure 3.
Figure 6 is a vertical cross sectional side view showing a second embodiment.
Figure 7 is a vertical cross sectional side view showing a variation of the second embodiment.
Figure 8 is a vertical cross sectional side view showing a third embodiment.
Figure 9 is a vertical cross sectional side view showing a variation of the third embodiment.
Figure 10 is a partial side cross sectional view showing a variation of a socket mounting section in a manifold base.
Figure 11 is a vertical cross sectional side view showing a fourth embodiment.
Figure 12 is a plan view showing an implementation in which pilot solenoid valves are joined according to the fourth embodiment.

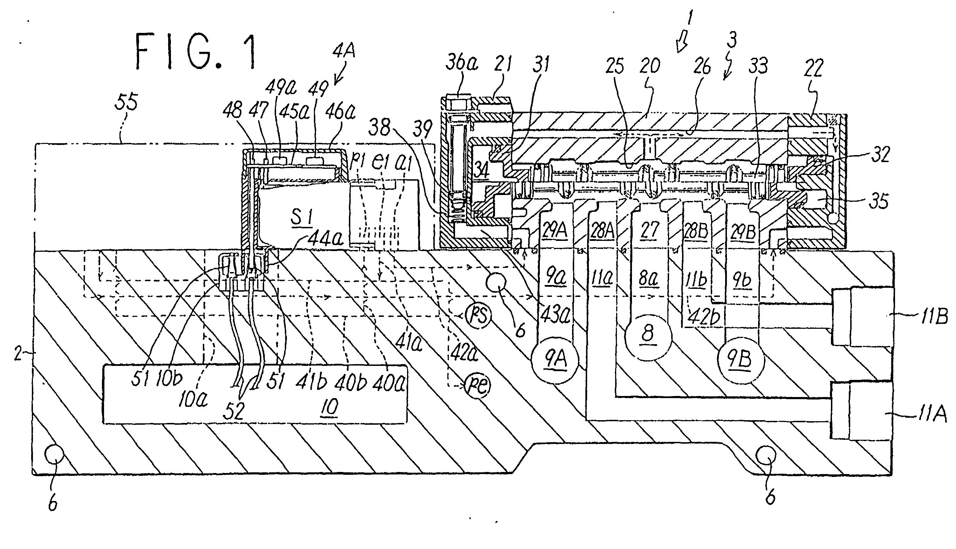

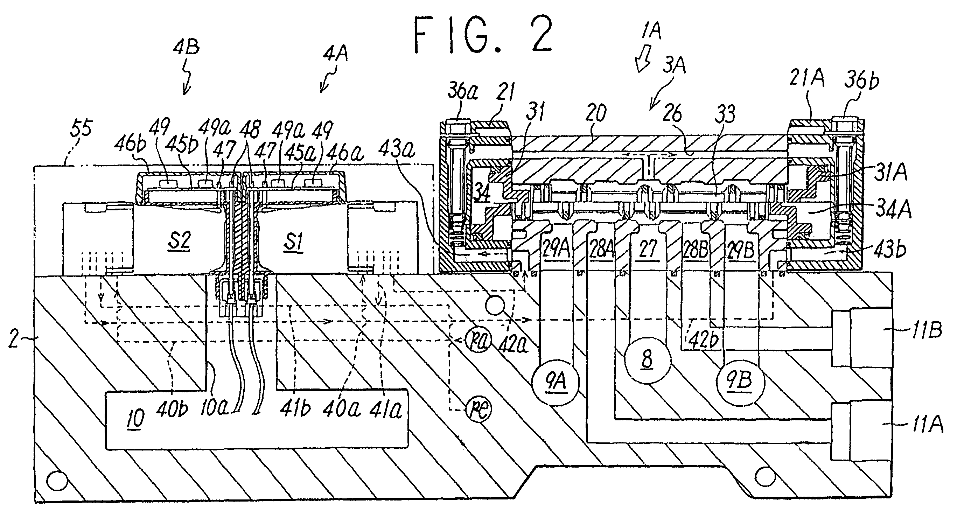

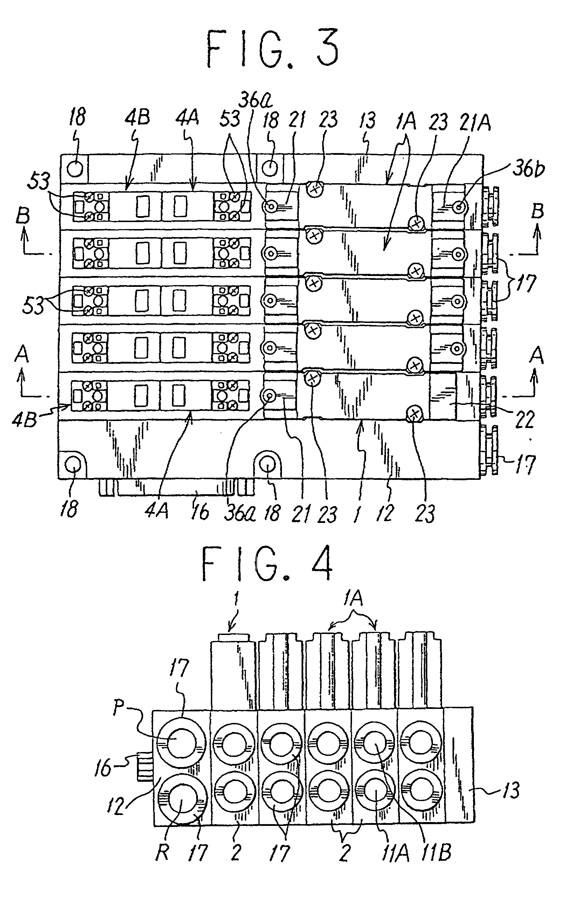

Figures 1 to 5 show a first embodiment.
Manifold base 2 of pilot solenoid valve 1 (detailed illustration in Figure 1) has an installation surface for main valve 3 or 3A (Figure 2) and an installation surface for first and second pilot valves 4A and 4B (Figure 2). The surfaces are separated longitudinally. In Figure 1, single solenoid main valve 3 and first solenoid-driven pilot valve 4A are shown individually mounted on their respective installation surfaces (the I-I cross section in Figure 3). In Figure 2, double solenoid main valve 3A is mounted on the same-structured manifold base 2 as in Figure 1 and first and second pilot valves 4A, 4B are mounted on the pilot valve installation surface (the B-B cross section in Figure 3).

Figures 3 and 4 show several joined manifold bases 2, each including main and pilot valves. A manifold base 2 has a pressure fluid supply channel 8; first and second ejection channels 9A and 9B; pilot supply channel ps; and pilot ejection channel pe. As shown in Figures 1 and 2, all channels run through the manifold base along the axis along which the bases are connected. Manifold base 2 also houses a wiring housing passage 10 for an energization system, and first and second output ports 11A and 11B opening to a front end surface. Supply channel 8, ejection channels 9A and 9B, and output ports 11A and 11B open to the main valve installation surface within the top surface of the manifold bases 2 via passages, 8a, 9a, 9b, 11a, and 11b. Within the top surface of manifold base 2, pilot supply and ejection channels ps and pe open to installation positions for first and second pilot valves 4a and 4B in the pilot valve installation surface. Wiring housing passage 10 communicates with socket mounting section 10b, which opens to the installation surface for the two pilot valves 4A and 4B via passage 10a.

The channels 8, 9A, and 9B that open to the main valve installation surface of manifold base 2 are formed under the main valve installation surface, and the pilot supply and ejection channels ps and pe are formed under the main valve installation position or under the installation surface between the main valve installation position and the pilot valve installation position. Wiring housing passage 10 is formed under the installation surface for pilot valves 4A and 4B. The manifold base has few large channels under the pilot valve installation surface, and thus sufficient space for the feeding line housing passage 10.

Although manifold base 2 includes supply channel 8 and discharge channels 9A and 9B, and pilot supply and ejection channels ps and pe separate from channels 8, 9A and 9B, these pilot channels can be omitted, and pilot supply passages 40a and 40b can communicate with supply channel 8, while pilot ejection passages 41a and 41b can communicate with ejection channels 9A or 98.

As shown in Figure 1, manifold base 2 allows installation of single solenoid main valve 3 on the main valve installation surface. It also allows installation of a double solenoid main valve 3A (Figure 2). This configuration allows various main valves 3 and 3A to be selectively mounted when a sufficient number of manifold bases 2 are joined, as shown in Figure 3. When a single solenoid valve type main valve 3 is installed, only the first pilot valve 4A is installed on the pilot valve mounting surface of manifold base 2; when a double solenoid valve type main valve 3A is installed, both first and second pilot valves 4A and 4B are installed.

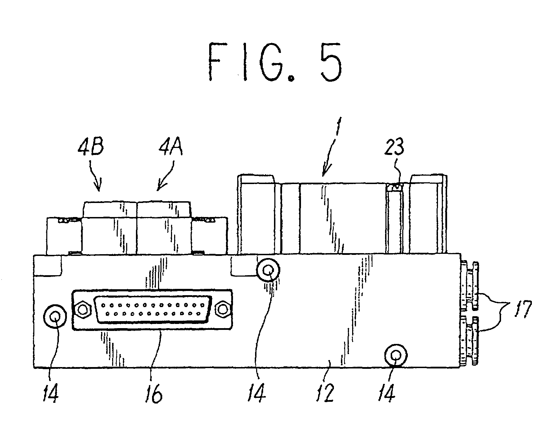

In pilot solenoid valves 1 and 1A, a required number of manifold bases 2 are connected together. The manifold bases 2 are joined by inserting connecting bolts 14 (see Figure 5) into connecting holes 6 of manifold base 2 and holes in corresponding positions of first side plate 12 at one end and second side plate 13 at the other end. A minimum number of manifold bases 2 required only for pilot solenoid valve 1 or 1A, however, can be connected together.

On its front surface, the first side plate 12 includes pressure fluid supply and ejection ports P and R. In a connector mounting hole formed in the outer surface, the plate has a multi-pole connector 16 that connects electrically to solenoids of pilot valves 4A and 4B (see Figures 3 to 5). The supply port P opens to positions corresponding to supply channel 8 and pilot supply channel ps in manifold base 2 through passages in first side plate 12. Ejection port R opens to positions corresponding to ejection channels 9A and 9B and pilot ejection channel pe. Second side plate 13 closes the other ends of these channels in manifold base 2.

A gasket - which is not shown - is mounted in connecting surfaces between manifold base 2 and first and second side plates 12 and 13 to preserve an air-tight seal in the channel.

A one-touch pipe joint 17 is attached to supply and ejection ports P and R of first side plate 12 and to output ports 11A and 11B of manifold base 2. When a flexible pressure air supply tube (not shown) is inserted into any port, the one-touch pipe joint 17 can engage the outer surface of the tube. Pressing a release bush enables the tube to be disengaged and removed.

Reference number 18 in Figure 3 designates a fixation hole formed in the side plates 12 and 13, which is used to mount pilot solenoid valve 1 on required members.

Figure 1 provides a detailed illustration of the single solenoid type main valve 3. This valve consists of a valve body 20 and first and second piston boxes 21 and 22, located at either axial end of the valve body 20. The piston boxes are connected to the valve body 20 with connecting screws (not shown), and valve body 20 is mounted on the main valve installation surface within the top surface of the manifold base 2 with an air-tight gasket, using multiple mounting screws 23 (see Figure 3).

Valve body 20 consists of a valve hole 25 and pilot passage 26, running axially through the body; a pressure fluid supply opening 27, first and second output openings 28 A and 28B and first and second output ejection openings 29A and 29B, all opening in a direction orthogonal to valve hole 25. When main valve 3 is mounted on the installation surface of manifold base 2, these openings communicate with their corresponding channels and ports. Pilot passage 26 communicates with supply opening 27.

A first piston 31 is inserted into a first piston box 21, coaxial with valve hole 25; a second piston 32 having a smaller diameter than the first piston 31 (the pressure receiving area is approximately half) is inserted into a second piston box 22; and a valve body 33 pressed by pistons 31 and 32 is inserted into valve hole 25, so that the pistons and valve body are free to slide along an axis. A first pressure chamber 34 in which first piston 31 slides communicates with first pilot output passage 42a of manifold base 2. A second pressure chamber 35 in which second piston 32 slides communicates with pilot passage 26.

When pilot fluid is output to first pressure chamber 34, valve body 33 moves to the right of the figure, and supply opening 27 communicates with output opening 28A, while output opening 28B communicates with ejection opening 29B (see the upper half of the valve body in Figure 1). When pilot fluid is ejected from first pressure chamber 34, the fluid supplied to second pressure chamber 35 through pilot passage 26 moves valve body 33 to the left of the figure, and supply opening 27 communicates with output opening 28B, while output opening 28A communicates with ejection opening 29A (see the lower half of the valve body in Figure 1). Thus described, main valve 3 has five ports.

Inserted into first piston box 21 in a way that permits it to slide, manual operation button 36a is normally forced upward by coil spring 38. It allows first pilot output passage 42a to communicate with the first pressure chamber 34. When the button is pressed against the force of the coil spring 38, the first pressure chamber 34 communicates with pilot channel 26, and a seal packing 39 blocks communication between first pressure chamber 34 and the first pilot output passage 42a. Thus, when an accident such as a service interruption prevents fluid from being output from pilot valve 4A to first pressure chamber 34, manual operation button 36a can be pressed to supply a pressure fluid from pilot passage 26 to first pressure chamber 34, driving valve body 33 due to the difference in diameter between pistons 31 and 32.

First pilot valve 4A includes first pilot supply opening p1, first pilot output opening a1, and first pilot ejection opening e1. It also has first solenoid s1 for driving the valve body of the pilot valve. The first pilot valve consists of a well-known direct operated three-port solenoid valve. In this valve, solenoid s1 when energized attracts a movable iron core (not shown), allowing pilot supply opening p1 to communicate with pilot output opening a1. When no current runs through solenoid s1, the movable iron core is returned to its position by a return spring (not shown), allowing pilot output opening a1 to communicate with pilot ejection opening e1.

The pilot supply and ejection openings p1 and e1 of the first pilot valve communicate with pilot supply and ejection channels ps and pe through pilot supply and ejection passages 40a and 41a, respectively, which are formed in manifold base 2. The first pilot output opening a1 communicates with first pressure chamber 34 through first pilot output channel 42a, formed in manifold base 2, and through passage 43a, formed in valve body 20 of main body and first piston box 21.

Since manifold base 2 may be used with a double solenoid pilot solenoid valve, it has an installation surface for second pilot valve 4B. Since a second pilot valve 4B with the same structure as the first pilot valve can be installed as shown in Figure 2, manifold base 2 has channels similar to those for the first pilot valve.

That is, the manifold base has channels corresponding to second pilot supply, output, and ejection openings p2, a2, and e2 of the second pilot valve 4B, and the second pilot supply and ejection openings p2 and e2 communicate with pilot supply and ejection channels ps and pe through pilot supply and ejection passages 40b and 41b, formed in the manifold base 2, respectively. Second pilot output opening a2 opens to the top surface of the second piston box 22 of valve body 20 in the manifold base 2, through second pilot output passage 42b.

When first and second pilot output channels 42a and 42b communicate in this way with pressure chambers 34 and 35 of the first and second piston boxes through valve body 20, first and second piston boxes 21 and 22 can be removed from valve body 20 for repairs or replacement while valve body 20 remains mounted on manifold base 2.

In the single solenoid main valve 3 in Figure 1, communication between second pilot output passage 42b and second pressure chamber 35 is blocked in the second piston box 22, closing passage 42b.

Solenoids s1 and s2 each have a solenoid cover 44, on which substrates 45a and 45b and protective covers 46a and 46b covering the substrates are mounted. Coil terminal 47, projecting upward from solenoids s1 and s2, and feeding terminal 48, penetrating the solenoid cover 44 downward, are connected electrically to an electric circuit printed and wired in substrates 45a and 45b and to a lamp 49a mounted on substrates 45a and 45b indicating energization of solenoids s1 and s2; and electronic parts 49, required to energize the solenoids, are also electrically connected to the circuit.

Sockets 51, to which feeding terminal 48 of the first and second pilot valves 4A and 4B are connected, are loaded on socket mounting section 10a, which opens to the pilot valve installation surface within the top surface of manifold base 2. The other end of feeding line 52 that is connected to one end of the terminal connected to the socket is electrically connected through wiring housing passage 10 to a pin in multi-pole connector 16. Solenoid cover 44 has a positioning section 44a that is externally fitted to socket 51, allowing the pilot valve to be positioned on manifold base 2.

When feeding sockets 51 are provided in this manner under the pilot valve installation surface of manifold base 2, feeding terminal 48 can be connected to socket 51 simultaneously with the mounting of the pilot valve on its installation surface, thereby allowing easy electrical connection of pilot valves 4A and 4B.

When pilot valves 4A and 4B are installed on manifold base 2 using positioning section 44a, each pilot opening communicates with the corresponding pilot passage in manifold base 2, and feeding terminal 48 is inserted into socket 51. Thus, the multi-connector 16 can feed both solenoids s1 and s2 of pilot valves 4A and 4B. Pilot valves 4A and 4B are mounted on the top surface of manifold base 2 in an air-tight configuration, using mounting screws 53 (see Figure 3). This prevents feeding line 52 from being exposed through the wiring housing passage 10 in manifold base 2.

Pilot valves 4A and 4B can be covered with a waterproof cover 55, as shown in the figure by a chain line, protecting the electrically operating parts and their energization system from water. This is also true in the following embodiments.

In the double solenoid type pilot solenoid valve 1A shown in Figure 2, main valve 3A has, on one side of valve body 20, first piston box 21 (identical to the single solenoid type main valve 3 in Figure 1); and on the other side of valve body 20, a second piston box 21A having the same configuration as first piston box 21. Thus, a second pressure chamber 34A and a second piston 31A, both provided in second piston box 21A, have the same diameters as first pressure chamber 34 and first piston 31. They also have a manual operation button 36b similar to manual operation button 36a. Double-solenoid-type pilot solenoid valve 1A includes the second pilot valve 4B, and a second pilot output passage 42b communicates with second pressure chamber 34A through passage 43b in valve body 20 and the second piston box 21A.

The other configuration of solenoid valve 1A is identical to solenoid valve 1. The main components have the same reference numbers; their detailed description is omitted.

In pilot solenoid valves 1 and 1A with the above configuration, when main valves 3 and 3A and pilot valves 4A and 4B are installed on manifold base 2, the openings of these valves communicate with the corresponding channels and ports, and solenoids s1 and s2 of the pilot valves are electrically connected to pins in multi-pole connector 16.

If a single solenoid type pilot solenoid valve 1 is used and pilot valve 4B is not installed, the openings of pilot channels 40b and 41b on the pilot valve installation surface must be closed with appropriate means - plugs (not shown), for example - to prevent the flow of pilot fluid. This is true of the following embodiments.

In the single solenoid type pilot solenoid valve 1 in Figure 1, when solenoid s1 of the pilot valve 4A is energized, pilot fluid flows to first pressure chamber 34 to drive the main valves 3, thereby outputting pressure fluid (such as compressed air) from the first output port 11A. When solenoid valve s1 is de-energized, pilot fluid in first pressure chamber 34 is ejected outside, outputting pressure fluid from second output port 11B. In pilot solenoid valve 1A, when solenoids s1 and s2 of pilot valves 4A and 4B are alternatively energized and de-energized, main valve 3A ejects fluid from first and second output ports 11A and 11B, alternately.

If an accident occurs, manual operation buttons 36a and 36b are used as described above.

In the pilot solenoid valve, main valves 3 and 3A and pilot valves 4A and 4B are installed on manifold base 2, separate from each other, so that single or double solenoid type main valve 3 or 3A can first be installed on the valve installation surface of manifold base 2, and one or two pilot valves can then be installed on the same surface depending on the main valve. This arrangement allows for either a single or double solenoid type pilot solenoid valve, and for the replacement of such solenoid valves. By replacing first piston 21 or second piston box 22 or 21A, the specification can be changed between the single solenoid type and the double solenoid type with valve body 20 remaining mounted on the manifold base.

To make other changes in the specification of the pilot solenoid valve or to repair or replace defective parts, only the part in question need be removed. This can be done without replacing both main and pilot valves. In contrast to conventional solenoid valves, which have a pilot valve directly attached to a main valve, this pilot solenoid valve allows main valves 3 and 3A and pilot valves 4A and 4B to stand discretely on the manifold base, permitting various cost-saving changes in the manual operation section, which is operated manually in the event of service interruption, in voltage supplied to the solenoids of the pilot valves, and in indicators. The main and pilot valves are installed discretely, and this facilitates the maintenance, inspection and failure discovery. In addition, maintenance and inspection of the main valve can be done without contacting pilot valves that have electric wiring. This feature improves the safety of maintenance and inspection operations.

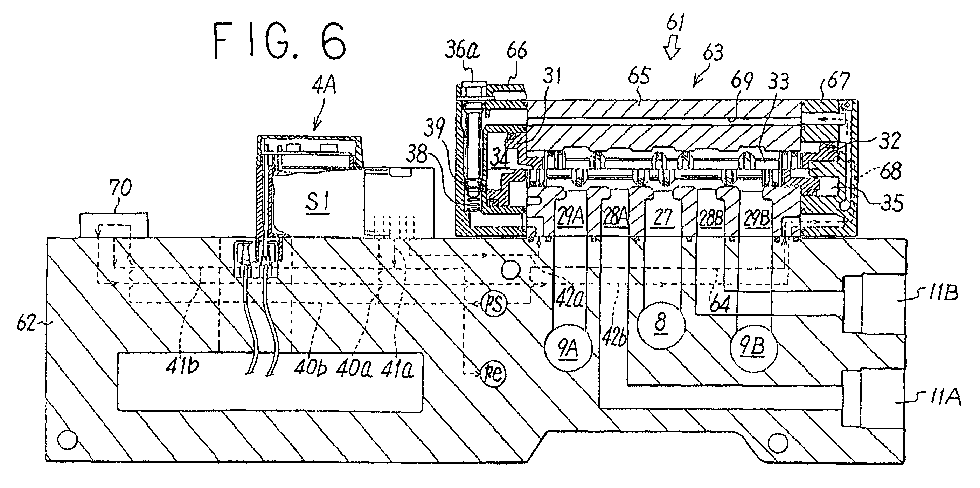

Figure 6 illustrates a second embodiment of this invention. A pilot solenoid valve 61 of single solenoid type includes an external pilot type main valve 63. As in the first embodiment, manifold base 62 has an installation surface for main valve 63 and a separate installation surface for first and second pilot valves 4A and 4B. In addition to the configuration shown in Figures 1 and 2, manifold 62 has an external pilot passage 64, one end of which communicates with pilot supply channel ps. Thus, an external pilot fluid flows through the pilot supply channel ps from a side plate similar to the first side plate 12 shown in Figures 3 and 4. The side plate does not allow pilot supply channel ps to communicate with supply port P.

Main valve 63 includes a valve body 65 and first and second piston boxes 66 and 67 at either axial end. The other end of external passage 64 (one end of which communicates with pilot supply channel ps) communicates with second pressure chamber 35, in which the second piston 32 slides. This communication occurs through passage 68 in valve body 65 and second piston box 67. External passage 64 also communicates with pilot passage 69 in the valve body 65, via second pressure chamber 35. But communication is blocked between second pilot output passage 42b and second pressure chamber 35 in second piston box 67.

In pilot solenoid valve 61, an external pilot fluid is supplied to second pressure channel 35 from pilot supply channel ps, so the installation surface for second pilot valve 4B does not include the pilot valve.

As shown in the figure, a plug 70 that allows pilot supply passage 40b to communicate with pilot output passage 42b can be provided in the mounting position of second pilot valve 4B. Or the pilot supply channel ps can be allowed to communicate directly with pilot output passage 42b, in order to allow pilot output passage 42b to communicate with second pressure chamber 35 in second piston box 67.

The other configuration and effects of solenoid valve 61 are the same as those of the solenoid valve 1 in the first embodiment, with main components having the same reference numbers. A detailed description is omitted.

In solenoid valve 61 according to this embodiment, when the manual operation button 36a is pressed, the pilot fluid in the external pilot passage 64 is supplied to first pressure chamber 34 through passage 68 and pilot passage 69, moving the valve body 33 to the right of the figure, due to the difference in diameter between piston 31 and piston 32 (see upper half of the valve body in Figure 6). When manual operation button 36a is released, pilot fluid in the first pressure chamber 34 is ejected outside, causing the external pilot fluid supplied to second pressure chamber 35 to move valve body 33 to the left of the figure (see lower half of the valve body in Figure 6).

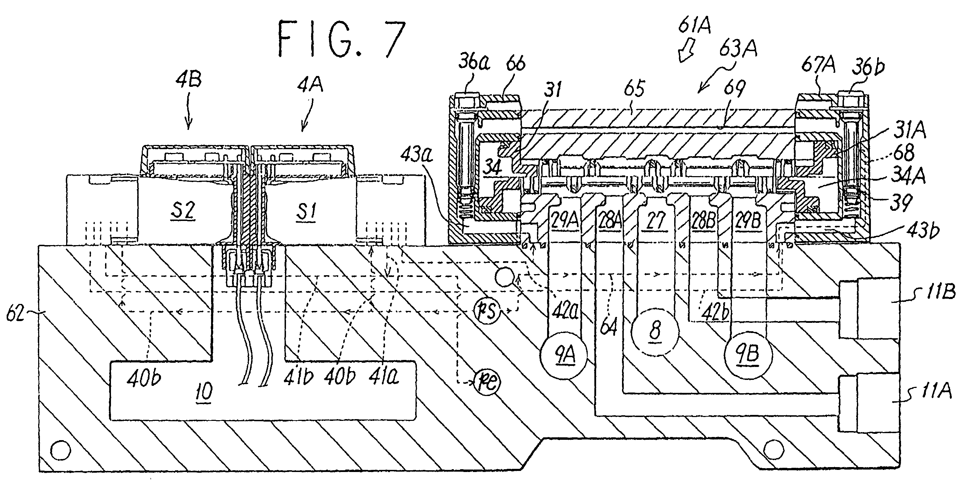

Figure 7 shows the use of a double solenoid type pilot solenoid valve 61A instead of a single solenoid type solenoid valve 61. In this case, manifold base 62 has the same configuration as in Figure 6, but the two pilot valves 4A and 4B must be mounted on manifold base 62. Instead of second piston box 67 in Figure 6, a second piston box 67A having the same configuration as first piston box 66 is mounted on one side of valve body 65 in main valve 63A. That is, second piston box 67A includes a second pressure chamber 34A and a second piston 31A, which have the same diameters as first pressure chamber 34 and first piston 31, respectively. It also has a passage 43b that allows second pilot output passage 42b to communicate with second pressure chamber 34A. The second piston box 67A also has a passage 68 that allows external pilot passage 64 to communicate with pilot passage 69; and a manual operation button 36b in passage 68. However, under the conditions shown in the figure, the seal packing 39 blocks communication between passage 68 and the second pressure chamber 34A.

The other configuration of the solenoid valve 61A in Figure 7 is the same as solenoid valve 61, with main components having the same reference numbers. A detailed description is omitted.

In solenoid valve 61A, when solenoid s1 of pilot valve 4A is energized, pilot fluid flows to first pressure chamber 34. When solenoid s2 of the pilot valve 4B is energized, pilot fluid flows to second pressure chamber 34A. If an accident occurs and manual operation button 36a or 36b is pressed, an external pilot fluid flows from passage 68 to first or second pressure chamber 34 or 34A.

The other effects of the solenoid valve 61A are almost identical to solenoid valve 61. A detailed description is omitted.

The solenoid valve according to the second embodiment can be provided by using manifold base 2, first piston box 66, and pilot valves 4A and 4B, or by somewhat modifying these parts. Specifications of the solenoid valves in Figures 1 and 2 can be adapted to an external pilot type, and these solenoid valves can be configured at low cost by using common parts.

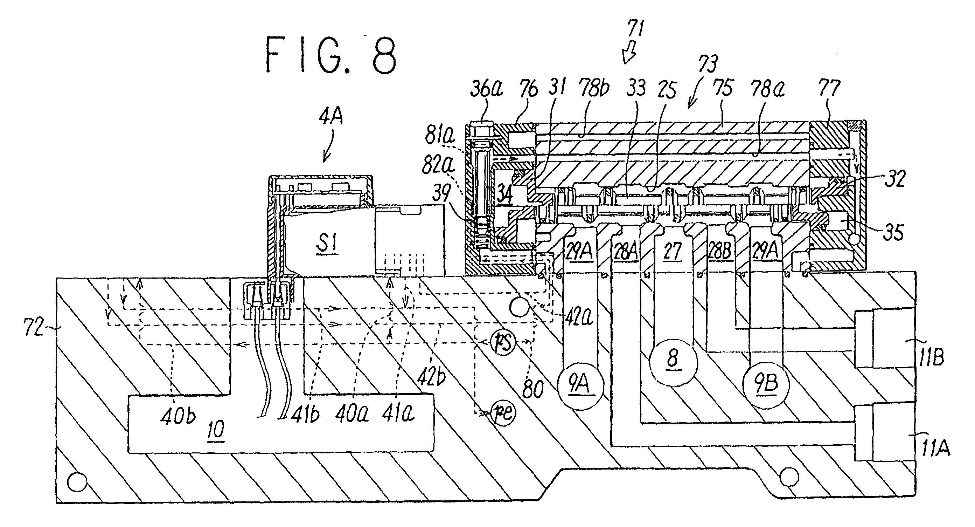

Figure 8 shows a third embodiment of this invention. A pilot solenoid valve 71 of single solenoid valve type includes a main valve 73 and a pilot valve 4A, which are of an external pilot type, but also have an installation surface for second pilot valve 4B on manifold base 72. In manifold base 72, the pilot passages collectively open to first piston box 76 in valve body 75. The manifold base according to this embodiment differs from those in the first and second embodiments and requires compatible main valve 73.

But since the basic configuration of manifold base 72 is the same as in the first and second embodiments, manifold bases 2, 62, and 72 can be formed of the same material by somewhat modifying the locations and number of pilot passages. In addition, when manifold bases are joined as shown in Figures 3 and 4, these types of manifolds can be mixed.

Main valve 73 includes a valve body 75 and first and second piston boxes 76 and 77 at either axial end. Valve hole 25 and first and second pilot passages 78a and 78b are axially formed in valve body 75. The first piston box 76 includes first piston 31, first pressure chamber 34, and manual operation button 36a. A second piston box 77 includes second piston 32 and second pressure chamber 35, of smaller diameter than first piston 31 and first pressure chamber 34.

As described above, one end of external pilot passage 80 and first and second pilot output passages 42a and 42b collectively open to the valve installation surface of manifold base 72, near first piston box 76 of valve body 75. The first pilot output passage 42a communicates with first pressure chamber 34 of first piston box 76, as in main valve 3according to the first embodiment. The second pilot output passage 42b communicates with second pilot passage 78b in valve body 75 through passage 81a in first piston box 76, but its end is closed with the second piston box 77.

External pilot passage 80 communicates with second pressure chamber 35 of second piston box 77 through passage 82a, and the gap around manual operation button 36a and first pilot passage 78a.

The other configuration of the third embodiment shown in Figure 8 is identical to the first embodiment shown in Figure 1, with main components having the same reference numbers. A detailed description is omitted.

In the pilot solenoid valve according to the third embodiment, when pilot valve 4A is operated to supply a pilot fluid to first pressure chamber 34, valve body 33 moves to the right of the figure to switch the channel (see the upper half of the valve body in Figure 8). When operation of the first pilot valve 4A is stopped to eject pilot fluid from first pressure chamber 34, valve body 33 is moved to the left of the figure by the external pilot fluid supplied to pressure chamber 35 of second piston box 77 through passage 82a and pilot passage 78a (see lower half of the valve body in Figure 6).

If an accident occurs and manual operation button 36a is pressed, the external pilot passage 80 communicates with first pressure chamber 34 through passage 82a. Seal packing 39 blocks communication between first pressure chamber 34 and first pilot output channels 42a, causing the external pilot fluid to flow into first pressure chamber 34 and move valve body 33 to the right of the figure. When manual operation button 36a is released, the pilot fluid in the first pressure chamber 34 is ejected outside and supplied to the second pressure chamber 35 through passage 78a, causing valve body 33 to move to the left of the figure.

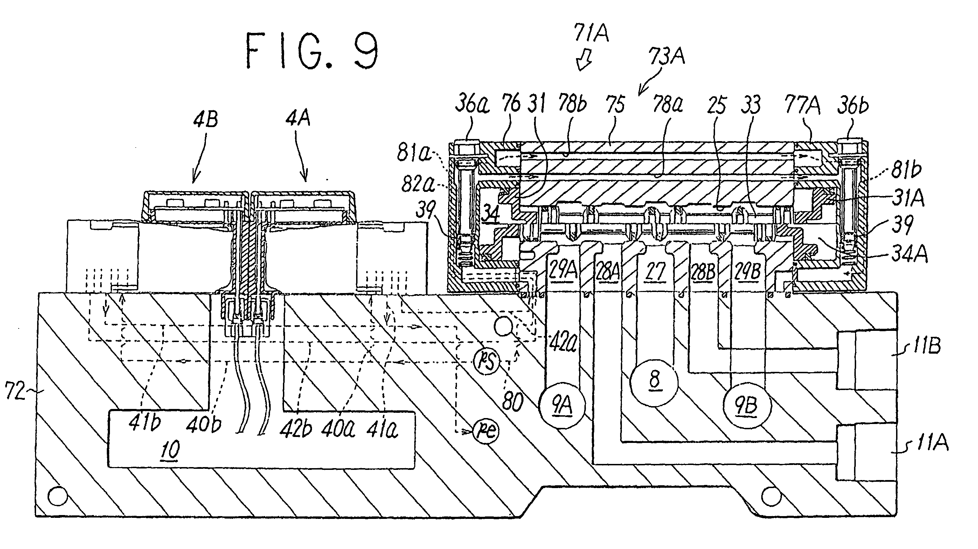

Figure 9 shows a variation in which double solenoid main valve 73A is installed on the same manifold base 72 of the third embodiment. A second piston box 77A in main valve 73A in pilot solenoid valve 71A includes second piston 31A and second pressure chamber 34A, which have the same diameters as first piston 31 and first pressure chamber 34 in first piston box 76. It also has a manual operation button 36b, similar to the manual operation button 36a of first piston box 76.

First pilot output passage 42a communicates with first pressure chamber 34 of first piston box 76. Second pilot output passage 42b communicates with second pressure chamber 34A via passage 81a in first piston box 76 and second pilot passage 78b in valve body 75, and through passage 81b in second piston box 77A. External pilot passage 80 communicates with the gap in the insertion hole of second manual operation button 36b through passage 82a, the gap around the manual operation button 36a, and first pilot passage 78a. Under the conditions shown in the figure, seal packing 39 of second manual operation button 36b blocks communication with second pressure chamber 34A.

The other configuration and effects of solenoid valves 71 and 71A are the same as with solenoid valves 1 and 1A, with main components having the same reference numbers.
A detailed description is omitted.

Solenoid valves 71 and 71A according to the third embodiment (and a variation of this embodiment) have the same configuration as the first and second embodiments, except for second piston boxes 77 and 77A. This facilitates the specification changes between single solenoid and double solenoid types.

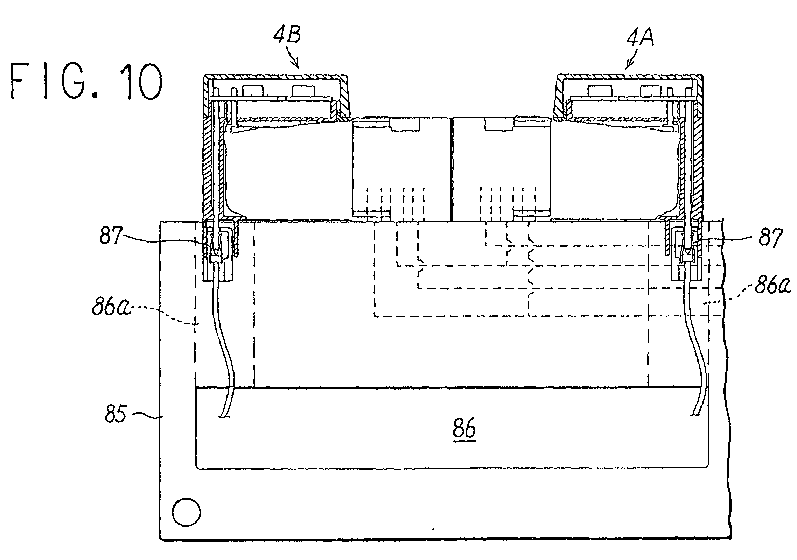

Figure 10 shows a variation in which socket mounting section 10a of the manifold base, in each embodiment, and socket 51 to which the feeding terminals 48 of the pilot valves 4A and 4B are connected, are provided between a pair of pilot valves 4A and 4B. In this variation, a pair of socket mounting sections 86a are formed at either end of the installation surface of manifold base 85 for pilot valves 4A and 4B, and a socket 87 is provided in each of the socket mounting sections 86a. This configuration can be used for each of the above embodiments.

In each of the above embodiments, feeding line 52 feeding solenoids s1 and s2 can be connected directly to feeding terminal 48, without passing through feeding line housing passage 10, in order to execute feeding from above pilot valves 4A and 4B.

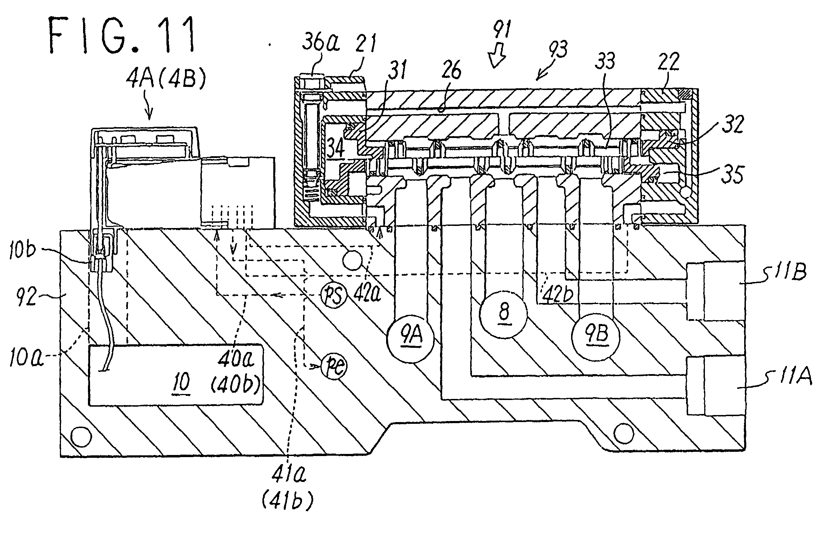

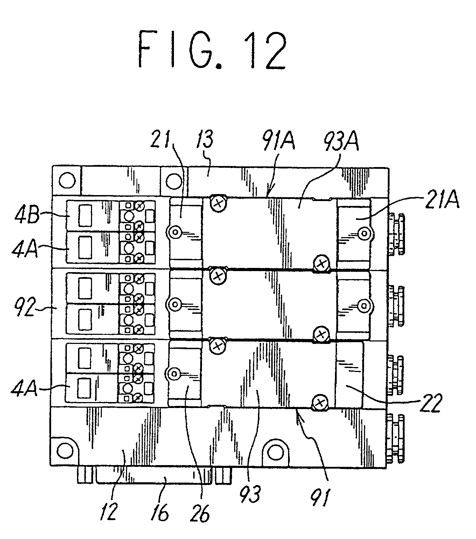

Each embodiment above has the main valve and the two pilot valves positioned in series; Figures 11 and 12 show a fourth embodiment, in which the two pilot valves are positioned in parallel.

A pilot solenoid valve 91 in Figure 11 includes a single solenoid type main valve 93 (see Figure 11) and the pilot valve 4A, while a pilot solenoid valve 91A in Figure 12 includes a double solenoid main valve 93A and pilot valves 4A and 4B, which are installed in parallel along the axis in which manifold bases 92 are joined, as shown in Figure 11.

Main valves 93 and 93A in solenoid valves 91 and 91A have the same configuration as main valves 3 and 3A in the first embodiment, but may be of the single or double solenoid type described in other embodiments. A requisite number of solenoid valves 91 and/or 91A can be joined, as shown in Figure 12.

Manifold base 92 must be configured according to the solenoid valve to be installed, but due to installation in parallel of pilot valves 4A and 4B, its longitudinal length and the positions in the top surface where pilot passages and wiring housing passage 10 open differ from those in other manifold bases. Still, passages and wiring housing passage in manifold bases are joined tightly in the direction in which the manifolds are joined.

Because the pilot valves 4A and 4B are installed as described, the pilot solenoid valve in the fourth embodiment is compact. The longitudinal length is reduced, despite an increase in width in the direction in which the manifold bases 92 are joined.

This embodiment is particularly effective when the number of pilot solenoid valves joined is small or when the main valve has a larger diameter than pilot valves 4A and 4B, due to its flow.

The other configuration and effects of the fourth embodiment are the same as the first to third embodiments.
A description are omitted.

In the pilot solenoid valve, according to each of the embodiments described above, since the main and pilot valves are installed discretely on the manifold base, the single or double solenoid type main valve can first be installed on the valve installation surface of the manifold base and one or two pilot valves then installed, depending on the main valve, thereby enabling a single or double solenoid type pilot solenoid valve.

In order to change specification of the pilot solenoid valve or to repair or replace defective parts, only the part or parts in question need be replaced. There is no need to replace both main and pilot valves, in contrast to solenoid valves with pilot valves directly attached to a main valve. Since the main and pilot valves are installed separately, maintenance and inspection can be done without contacting pilot valves that have electric wiring. This feature improves safety and makes repair cheaper.

As described above in detail, in this pilot solenoid valve, the main valve and two pilot valves are installed discretely on their installation surface. This enables the part or parts in question to be replaced without replacing both the main and pilot valves in the event of specification changes, failure, maintenance, or inspection. This facilitates specification changes, repair, and replacement, and also reduces costs.

## Claims

1. A pilot solenoid valve (1; 1A; 61; 61A; 71; 71A; 91: 91A) having, on a manifold base (2; 62; 72; 92), a main valve (3; 3A; 63; 63A; 73: 73A; 93: 93A) for switching an output opening (28A, 28B) between a supply opening (27) and an ejection opening (29A, 29B) for communication, and at least one pilot valve (4A, 4B) driven by a solenoid (51, 52) to drive the valve body (33) of the main valve (3; 3A; 63; 63A; 73; 73A; 93: 93A), the pilot solenoid valve (1; 1A; 61; 61A; 71; 71A; 91: 91A) axially driving the valve body (33) of the main valve (3; 3A; 63; 63A; 73: 73A; 93: 93A) using pilot fluid supplied or ejected through the or each pilot valve (4A, 4B) to switch between the openings (127, 29A, 29B) for communication,pressure fluid supply and ejection channels (8, 9A, 9B) running through the manifold base (2; 62; 72; 92) in the direction in which a number of manifold bases (2; 62; 72; 92) may be joined, and an output port (11A, 11B) in the manifold base (2; 62; 72; 92) that opens to a front end surface, passages (8a, 9a, 9b, 11a, 11b) in the manifold base (2; 62; 72; 92) opening the channels (8, 9A, 9B) and port (11A, 11B) into corresponding openings in the main valve installation surface, wherein the pilot solenoid valve (1; 1A; 61; 61A; 71; 71A; 91: 91A) further comprises a main valve installation surface on the manifold base (2; 62; 72; 92), on which said main valve (3; 3A; 63; 63A; 73: 73A; 93: 93A) is installed and a separate pilot valve installation surface on the manifold base (2; 62; 72; 92) on which said at least one pilot valve (4A, 4B) is installed separately from the main valve (3; 3A; 63; 63A; 73: 73A; 93: 93A) first and second pilot supply and ejection passages (40a, 40b) in the manifold base (2; 62; 72; 92) that open into positions corresponding to the pilot supply and ejection openings (p1, p2, e1, e2) in the pilot valve installation surface, and at least one pilot output passage (42a, 42b) in the manifold base (2; 62; 72; 92) with one end opening into the pilot output opening (a1, a2) in the pilot valve installation surface and the other end opening into the pilot fluid passage in the main valve installation surface for the main valve (3; 3A; 63; 63A; 73: 73A; 93: 93A).

2. A pilot solenoid valve (61; 61A; 71; 71A) as claimed in Claim 1, wherein the manifold base (62: 72) includes an external pilot passage (64, 80) that allows the pilot supply channel (ps) to open into the pilot fluid passages in the main valve installation surface, instead of or in addition to the at least one pilot output passage (42a, 42b).

3. A pilot solenoid valve (1; 1A; 61; 61A; 71: 71A; 91: 91A) as claimed in either Claim 1 or 2, wherein feed sockets connected to a feed line in a feed line housing passage in the manifold base are provided on the installation surface for two pilot valves (4A, 4B), and wherein the pilot valves (4A, 4B) each have a feed terminal connected to the socket when the pilot valves (4A, 4B) are mounted on their installation surface.

4. A pilot solenoid valve (1; 1A; 61: 61A; 71; 71A; 91; 91A) as claimed in Claim 1 or Claim 2, including a single pilot valve (4A), and a removable plug (70) for temporarily closing the channel on the pilot valve installation surface where no pilot valve is provided.

## Patentansprüche

1. Vorgesteuertes Magnetventil (1, 1A, 61, 61A, 71 ,71A, 91, 91A), das versehen ist mit einem Hauptventil (3, 3A, 63, 63A, 73, 73A, 93, 93A), das zum Zuschatten einer Austrittsbohrung (28A, 28B) auf eine Zulaufbohrung (27) und eine Ablaufbohrung (29A, 29B) bestimmt ist, und mit mindestens einem von einem Magnet (51, 52) betätigten und der Betätigung des Ventilkörpers (33) des Hauptventils (3, 3A, 63, 63A, 73, 73A, 93, 93A) dienenden Vorsteuerventil (4A, 4B), die beide auf einer Unterplatte (2, 62, 72, 92) montiert sind, wobei das vorgesteuerte Magnetventil (1, 1A, 61, 61A, 71, 71A, 91, 91A) zum Zuschalten der Bohrungen (127 [sic!], 29A, 29B) aufeinander den Ventilkörper (33) des Hauptventils (3, 3A, 63, 63A, 73, 73A, 93, 93A) mit Hilfe des über das oder jedes der Vorsteuerventile (4A, 4B) zugeführten oder abgeleiteten Vorsteuermediums in axialer Richtung bewegt, mit Druckmediumzulauf- und -ablaufkanälen (8, 9A, 9B), die in der Unterplatte (2, 62, 72, 92) in der Richtung ausgeführt sind, in der mehrere Unterplatten (2, 62, 72, 92) aneinander angeschlossen werden können, mit einer Austrittsbohrung (11A, 11B) in der Unterplatte (2, 62, 72, 92), die an einer vorderseitigen Fläche mündet, und mit Verbindungsbohrungen (8a, 9a, 9b, 11a, 11b) in der Unterplatte (2, 62, 72, 92), die die Kanäle (8, 9A, 9B) und die Bohrung (11A, 11B) mit entsprechenden Bohrungen in der Hauptventilanbaufläche verbinden, **dadurch gekennzeichnet, dass** an dem vorgesteuerten Magnetventil (1, 1A, 61, 61A, 71, 71A, 91, 91A) an der Unterplatte (2, 62, 72, 92) des weiteren eine Hauptventilanbaufläche vorhanden ist, an der das Hauptventil (3, 3A, 63, 63A, 73, 73A, 93, 93A) montiert ist, und an der Unterplatte (2, 62, 72, 92) eine getrennte Vorsteuerventilanbaufläche vorhanden ist, an der getrennt vom Hauptventil (3, 3A, 63, 63A, 73, 73A, 93, 93A) mindestens ein Vorsteuerventil (4A, 4B) montiert ist, in der Unterplatte (2, 62, 72, 92) eine erste und eine zweite Vorsteuerzulauf- und -ablaufverbindungsbohrung (40a, 40b), die an Stellen münden, die den Vorsteuerzulauf- und -ablaufbohrungen (p1, p2, e1, e2) an der Vorsteuerventilanbaufläche entsprechen, und in der Unterplatte (2, 62, 72, 92) mindestens eine Vorsteueraustrittsverbindungsbohrung (42a, 42b) vorhanden sind, deren eines Ende in die Vorsteueraustrittsbohrung (a1, a2) an der Vorsteuerventilanbaufläche und deren anderes Ende in die Vorsteuermediumverbindungsbohrung an der Hauptventilanbaufläche für das Hauptventil (3, 3A, 63, 63A, 73, 73A, 93, 93A) mündet.

2. Vorgesteuertes Magnetventil (61, 61A, 71, 71A) nach Anspruch 1, **dadurch gekennzeichnet, dass** in der Unterplatte (62, 72) eine Fremdvorsteuerverbindungsbohrung (64, 80) vorhanden ist, durch die anstelle der oder zusätzlich zu der mindestens einen Vorsteueraustrittsverbindungsbohrung (42a, 42b) der Vorsteuerzulaufkanal (ps) in die Vorsteuermediumverbindungsbohrungen an der Hauptventilanbaufläche münden kann.

3. Vorgesteuertes Magnetventil (1, 1A, 61, 61A, 71, 71A, 91, 91A) nach Anspruch 1 oder 2, **dadurch gekennzeichnet, dass** an der Anbaufläche für zwei Vorsteuerventile (4A, 4B) Buchsen vorgesehen sind, die an eine in einem Kanal für elektrische Zuleitungen in der Unterplatte untergebrachte elektrische Zuleitung angeschlossen sind, und dass jedes der Vorsteuerventile (4A, 4B) einen Steckerstift hat, der in die Buchse eingesetzt ist, wenn die Vorsteuerventile (4A, 4B) an der für sie vorgesehenen Anbaufläche montiert sind.

4. Vorgesteuertes Magnetventil (1, 1A, 61, 61A, 71, 71A, 91, 91A) nach Anspruch 1 oder 2, zu dem ein einzelnes Vorsteuerventil (4A) gehört und ein herausnehmbarer Stopfen (70) zum zeitweiligen Verschließen des Kanals an der Stelle der Vorsteuerventilanbaufläche ohne Vorsteuerventil vorhanden ist.

## Revendications

1. Electrovanne à pilote (1; 1A ; 61A; 71 ; 71A ; 91. 91A) ayant, sur une base de collecteur (2 ; 62 ; 72 ; 92), une soupape principale (3 ; 3A ; 63 ; 63A ; 73 ; 73A ; 93 : 93A) destinée à commuter une ouverture de sortie (28A, 28B) entre une ouverture d'amenée (27) et une ouverture d'éjection (29A, 29B) pour la communication, et au moins une soupape pilote (4A, 4B) commandée par un électro-aimant (51, 52) pour déplacer le corps de soupape (33) de la soupape principale (3; 3A; 63; 63A; 73; 73A; 93 : 93A), l'électrovanne à pilote (1; 1A ; 61A ; 71 ; 71A ; 91 ; 91A) déplaçant axialement le corps de soupape (33) de la soupape principale (3 ; 3A ; 63 ; 63A ; 73 ; 73A ; 93 : 93A) à l'aide d'un fluide pilote amené ou éjecté à travers la ou chaque soupape pilote (4A, 4B) pour commuter entre les ouvertures (127, 29A, 29B) pour la communication, des conduits d'amenée et d'éjection du fluide sous pression (8, 9A, 9B) s'étendant à travers la base de collecteur (2 ; 62 ; 72 ; 92) dans la direction dans laquelle plusieurs bases de collecteur (2 ; 62 ; 72 ; 92) peuvent être réunies, et un orifice de sortie (11A, 11B) étant prévu dans la base de collecteur (2 ; 62 ; 72 ; 92), qui s'ouvre sur une surface d'extrémité frontale, des passages (8a, 9a, 9b, 11a, 11b) ménagés dans la base de collecteur (2 ; 62 ; 72 ; 92) ouvrant les conduits (8, 9A, 9B) et l'orifice (11A, 11B) dans des ouvertures correspondantes ménagées dans la surface de montage de la soupape principale, dans laquelle l'électrovanne à pilote (1 ; 1A ; 61 ; 61A ; 71 ; 71A ; 91 ; 91A) comprend en outre une surface de montage de soupape principale sur la base de collecteur (2 ; 62 ; 72 ; 92) sur laquelle ladite soupape principale (3 ; 3A ; 63 ; 63A ; 73 ; 73A ; 93 ; 93A) est montée et une surface séparée de montage de soupape pilote sur la base de collecteur (2 ; 62 ; 72 ; 92) sur laquelle ladite au moins une soupape pilote (4A, 4B) est montée séparément de la soupape principale (3 ; 3A ; 63 ; 63A ; 73 ; 73A ; 93 ; 93A), des premier et deuxième passages d'amenée et d'éjection pilotes (40A, 40B) prévus dans la base de collecteur (2; 62; 72; 92) qui s'ouvrent dans des positions qui correspondent aux ouvertures d'amenée et d'éjection pilotes (p1, p2, e1, e2) prévues dans la surface de montage de soupape pilote, et au moins un passage de sortie pilote (42a, 42b) prévu dans la basé de collecteur (2 ; 62 ; 72 ; 92) avec une extrémité s'ouvrant dans l'ouverture de sortie pilote (a1, a2) ménagée dans la surface de montage de soupape pilote et l'autre extrémité s'ouvrant dans le passage de fluide pilote prévu dans la surface de montage de la soupape principale (3 ; 3A ; 63 ; 63A ; 73 ; 73A ; 93 : 93A)

2. Electrovanne à pilote (61 ; 61A ; 71 ; 71A) selon la revendication 1, dans laquelle la base de collecteur (62 ; 72) comprend un passage pilote externe (64, 80) qui permet au conduit d'amenée pilote (ps) de s'ouvrir dans les passages de fluide pilote prévus dans la surface de montage de soupape principale, au lieu ou en supplément de l'au moins un passage de sortie pilote (42a, 42b).

3. Electrovanne à pilote (1 ; 1A ; 61 ; 61A; 71 ; 71A ; 91 ; 91A) selon la revendication 1 ou 2, dans laquelle des prises d'alimentation connectées à une ligne d'alimentation située dans un passage de logement de lignes prévu dans la base de collecteur sont prévues sur la surface de montage pour deux soupapes pilotes (4A, 4B) et dans laquelle les soupapes pilotes (4A, 4B) ont chacune une borne d'alimentation connectée à la prise lorsque les soupapes pilotes (4A, 4B) sont montées sur leur surface de montage.

4. Electrovanne à pilote (1 ; 1A ; 61A ; 71 ; 71A ; 91 ; 91A) selon la revendication 1 ou la rèvendication 2, comprenant une unique soupape pilote (4A) et un bouchon amovible (70) destiné à fermer temporairement le conduit prévu sur la surface de montage de soupape pilote à l'endroit où il n'est pas prévu de soupape pilote.
